# EUROPEAN PATENT SPECIFICATION

(11) **EP 1 895 345 B1**
(45) Date of publication and mention of the grant of the patent: **17.03.2010**
(21) Application number: 07016908.1
(22) Date of filing: 29.08.2007
(51) Int. Cl.: G02B 13/06, H04N 5/225, G03B 37/04

(54) **Panoramic imaging device**
Vorrichtung für Panorama Aufnahmen
Dispositif d'imagerie panoramique

(30) Priority: 30.08.2006 JP 2006234562
(43) Date of publication of application: 05.03.2008
(73) Proprietor: Funai Electric Co., Ltd., Daito-shi, Osaka 574-0031 (JP)
(72) Inventor: Nakao, Yoshizumi, Daito-shi Osaka 574-0013 (JP); Toyoda, Takashi, Daito-shi Osaka 574-0013 (JP); Masaki, Yasuo, Daito-shi Osaka 574-0013 (JP)
(74) Representative: Grünecker, Kinkeldey, Stockmair & Schwanhäusser Anwaltssozietät

(56) References cited:
- EP-A- 0 292 764
- EP-A- 1 847 873
- EP-A- 1 887 790
- DE-B- 1 016 033
- DE-B3-102004 003 013
- US-A- 3 113 484
- US-B1- 6 747 702

## Description

### BACKGROUND OF THE INVENTION

### 1. Field of the Invention

The present invention relates to a panoramic imaging device.

### 2. Description of the Related Art

A panoramic imaging device is known which uses a wide-angle optical system such as a fisheye lens to collect light entering in a wide capture angle. However, a panoramic image captured by such imaging device is likely to have large distortion, so that a complex process of distortion correction is required to digitally process the captured image so as to reproduce a normal panoramic image. On the other hand, there have been advances in the technology to convert captured images to digital information, and process them. Various imaging devices have been developed using such technology to create a panoramic image in a wide capture angle, in which the capture angle is divided into multiple predetermined successive capture ranges, such that multiple images respectively captured in the predetermined successive capture ranges are combined to reproduce a panoramic image. Hereinafter, such panoramic imaging device to capture images in predetermined successive capture ranges, and combine them for reproducing a panoramic image is referred to as a "panoramic imaging device of image combination type".

Broadly, there are two kinds of panoramic imaging devices of image combination type. One is to use and place multiple optical lens systems, each having an imaging element, at predetermined angular positions, such that images formed by the respective optical lens systems are imaged by the respective imaging elements. The other is to use a single optical lens system which is mechanically pivoted stepwise at predetermined angular intervals so as to image multiple images in predetermined capture ranges, respectively. The former requires placement of multiple optical lens systems in one imaging device, while the latter requires a mechanism to pivot the optical lens system, so that both panoramic imaging devices have a problem of large volume and size in its entirety.

For the purpose of reducing the volume and size of the entire panoramic imaging device of image combination type, one may propose the use of optical elements such as prisms which are capable of changing the propagation direction of light in an optical lens system. However, if such optical elements are used, respective images formed on an imaging element are mirror-inverted due to the effect of the optical elements. Thus, it becomes necessary to convert the mirror-inverted images to normal images when combining the respective images to reproduce a panoramic image. Accordingly, the proposed use of optical elements is likely to cause the process of reproducing a panoramic image from the respective images to be complex.

Each of US 3113484 A and DE 1016033 B disclose an apparatus for producing panoramic stereoscopic images, comprising lenses with parallel optical axes and in horizontal alignment with each other, a film strip positioned in back of said lenses and a system of prisms positioned in front of said lenses, such that each prism covers a part of the angular range of the object to be imaged and the images originating from respective angular ranges are formed on the film strip next to each other.

EP 0 292 764 A discloses a wide angle sight glass, comprising lenses with parallel optical axes, a detector array positioned in back of said lenses and a system of prisms positioned in front of said lenses, such that each prism covers a part of the angular range of the object to be imaged and the images originating from respective angular ranges are formed on the detector array next to each other.

EP 1847 873 A1, which is relevant with respect to novelty according to Art. 54(3) EPC only, discloses a panoramic imaging device with a digital signal processor and an image reproduction microprocessor, which convert parts of a panoramic image formed on a detector array into electronic image information and sequentially read this information, thereby combining the parts of the panoramic image.

### SUMMARY OF THE INVENTION

An object of the present invention as defined by claim 1 is to provide a panoramic imaging device of image combination type which is thin and can be prevented from becoming large in volume and size in its entirety, and in which the process of combining respective images imaged in predetermined successive capture ranges in a capture angle to reproduce a panoramic image can be prevented from becoming complex.

According to the present invention, this object is achieved by a panoramic imaging device comprising: an optical lens system for collecting lights entering in multiple predetermined successive capture ranges in a capture angle so as to form corresponding multiple images on a predetermined focal plane; imaging means placed at the focal plane for converting the multiple images formed by the optical lens system to electronic image information; and image reproducing means for combining the electronic image information of the multiple images from the imaging means so as to reproduce a panoramic image. The optical lens system comprises: an optical lens array having a center lens for receiving light entering in a front range in the capture angle as well as left and right side lenses which are formed on a plane having the center lens formed thereon and on left and right sides of the center lens, respectively, and which have optical axes parallel to that of the center lens, so as to respectively receive lights entering in left and right ranges in the capture angle; and left and right optical elements placed on a light entrance side of the optical lens array for mirror-reflecting and guiding the lights entering in the left and right ranges in the capture angle to the left and right side lenses, directing each light entering each side lens along the optical axis of the each side lens.

The imaging means comprises: an XY address type solid-state imaging element with unit pixels arranged in a matrix of rows and columns, in which an image (hereafter referred to as "front range image") formed by the center lens in the front range in the capture angle and images (hereafter referred to as "left and right range images") formed by the left and right side lenses in the left and right ranges in the capture angle are formed in order in a row of the unit pixels of the solid-state imaging element; and reading means for reading the image information of the left and right range images in one direction in the row of the unit pixels of the solid-state imaging element and for reading the image information of the front range image in a direction opposite to the one direction in the row of the unit pixels of the solid-state imaging element, so as to eliminate effects of mirror-reflection of the left and right range images that are caused by the left and right optical elements. Further, the image reproducing means combines the front range image and the left and right range images read by the reading means as is, so as to reproduce the panoramic image.

Preferably, the reading means reads the unit pixels from the lowermost row to the uppermost row in the solid-state imaging element so as to eliminate up/down inversion of the single-eye images therein.

Further preferably, each of the left and right optical elements is a right-angle prism.

According to the panoramic imaging device of the present invention, the optical lens system comprises the optical lens array having the center lenses and the side lenses that are placed on one plane, and also comprises the optical elements such as right-angle prisms for collecting lights entering in the left and right ranges in the capture angle so as to guide the lights to the side lenses. This can make the panoramic imaging device thin, and can prevent the entire panoramic imaging device from becoming large in volume and size. Furthermore, the direction of reading the images (image information) on the solid-state imaging element is switched such that the direction of reading the front range image is opposite to that of reading each of the left and right range images, so as to eliminate the effects of mirror-reflection of the left and right range images that are caused by the optical elements. Accordingly, the image reproducing means can simply combine the read front range image with the read left and right range images as is, without requiring the image reproducing means to exchange or reverse the positions of the left and right range images relative to the position of the front range image or to invert such images up/down and left/right. Thus, the process of combining the respective images in the respective ranges in the capture angle to reproduce a panoramic image can be prevented from becoming complex.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1 is a schematic perspective view of a panoramic imaging device according to an embodiment of the present invention;
FIG. 2 is a schematic front view of an optical lens system of the panoramic imaging device;
FIG 3 is a schematic bottom cross-sectional view of the optical lens system of the panoramic imaging device;
FIG. 4 is a schematic optical path diagram of the optical lens system of the panoramic imaging device with optical lenses, showing a light flux passing through each optical lens;
FIG. 5 is a schematic front view of a solid-state imaging element of the panoramic imaging device, showing single-eye images imaged in a front range and left and right ranges in a capture angle;
FIG 6 is a schematic circuit arrangement of the solid-state imaging element of the panoramic imaging device;
FIG. 7 is a schematic perspective view of a part of the panoramic imaging device along with a target object to be imaged in a capture angle of approximately 120°, showing a relationship between the target object and an image formed on the solid state-imaging element;
FIG 8 is a schematic view of an image corresponding to image information read from the solid-state imaging element of the panoramic imaging device; and
FIG 9 is a schematic view of a panoramic image reproduced by an image reproduction microprocessor of the panoramic imaging device.

### DESCRIPTION OF THE PREFERRED EMBODIMENTS

Embodiments of the present invention, as best mode for carrying out the invention, will be described hereinafter with reference to the drawings. The present invention relates to a panoramic imaging device. It is to be understood that the embodiments described herein are not intended as limiting, or encompassing the entire scope of, the present invention. Note that like parts are designated by like reference numerals, characters or symbols throughout the drawings.

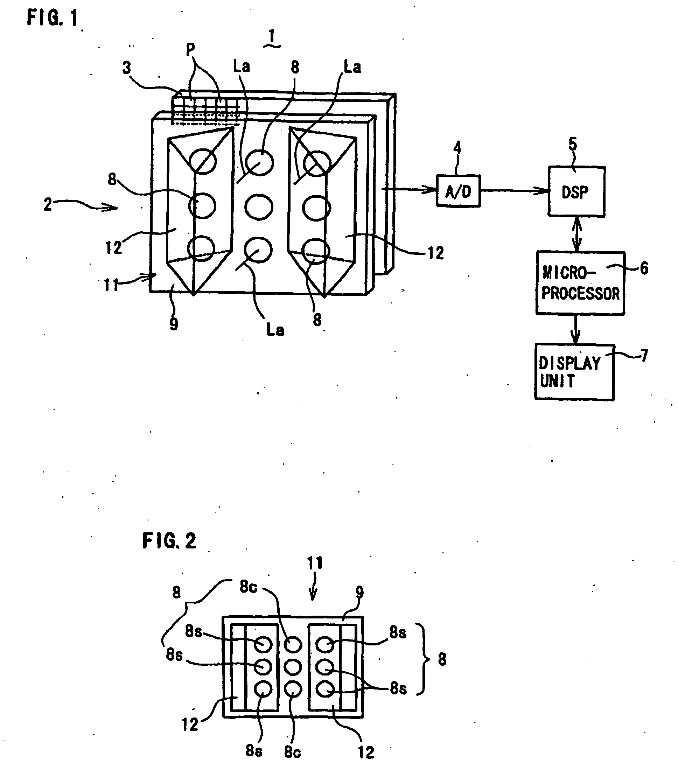

Referring to FIG. 1 to FIG 9, a panoramic imaging device 1 according to an embodiment of the present invention will be described. As shown in FIG 1, the panoramic imaging device 1 of the present embodiment comprises: an optical lens system 2 for collecting light entering therein in a capture angle (picture-taking angle) of 120° (approximately 120°) so as to form images on a predetermined focal plane; an XY address type solid-state imaging element 3 (hereafter referred to simply as "solid-state imaging element") (claimed "imaging means") placed at the focal plane of the optical lens system 2 for converting the images formed by the optical lens system 2 to electronic image information; and a processing circuit for signal processing and display.

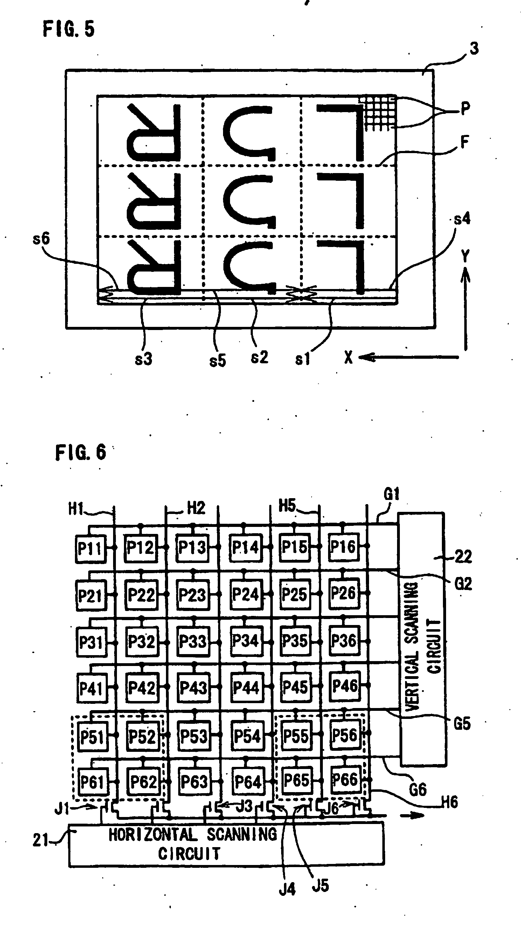

The processing circuit comprises: a horizontal scanning circuit 21 and a vertical scanning circuit 22 (claimed "reading means": refer to FIG 6) for reading, in a predetermined process or sequence described later, the electronic image information corresponding to the images formed on the solid-state imaging element 3; an A/D (Analog-to-Digital) converter 4 for converting the image information read from the solid-state imaging element 3 to a digital signal; a DSP 5 (Digital Signal Processor) for receiving and temporarily storing the digital signal from the A/D converter 4; and an image reproduction microprocessor 6 (claimed "image reproducing means") for subjecting the image information received and temporarily stored by the DSP 5 to image processing, such as combining the images, to reproduce a panoramic image from the digital signal of the image information. The panoramic imaging device 1 further comprises a display unit 7 such as a liquid crystal panel for displaying the reproduced panoramic image.

As shown in FIG 1 and FIG 2, the optical lens system 2 of the present embodiment comprises: an optical lens array 11 having 9 (nine) optical lenses 8 which have mutually parallel optical axes La, and which are arranged in a matrix of 3 (three) rows and 3 (three) columns and integrally formed as single convex lenses on one plane or surface of a transparent substrate 9; and two 45-45-90 degree right-angle prisms 12 (claimed "optical elements") placed on the light entrance side of the optical lens array 11 to face the three optical lenses 8 in the left and right rows of the matrix, respectively. All the nine optical lenses 8 have a view angle (capture angle) of 40°. Note that the optical lenses 8 are not required to be integrally formed on the transparent substrate 9, and can be held by a lens holder so as to be arranged on a two-dimensional plane.

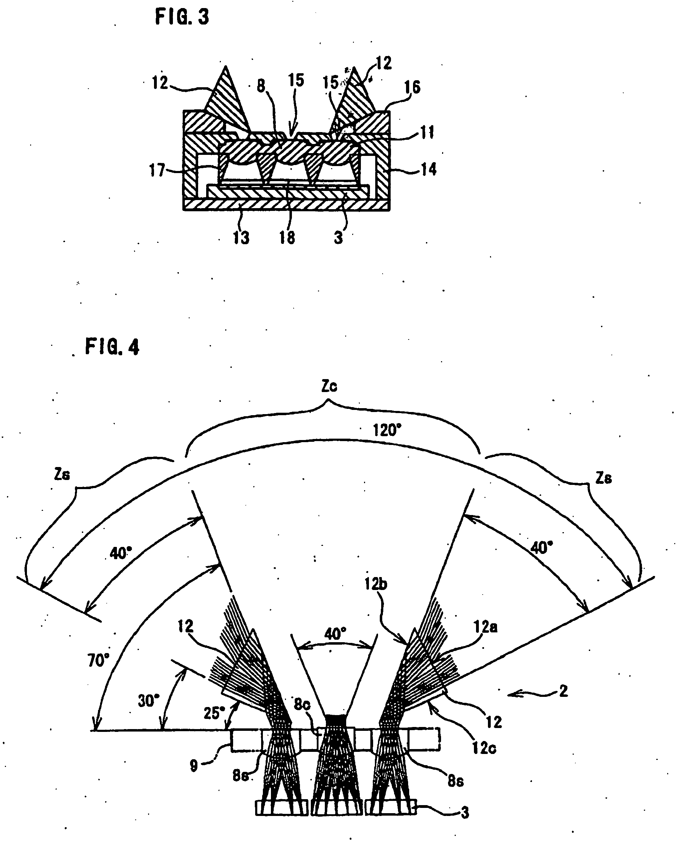

Referring to FIG 3, the optical lens system 2 will be described in more detail. The optical lens array 11 is supported by a lens holder 14 fixed on a base board 13. Stop apertures 15 are formed in the lens holder 14 at positions corresponding to, and facing, the respective optical lenses 8 in the lens holder 14. The 45-45-90 degree right-angle prisms 12 are supported via a prism holder 16 fixed on the lens holder 14 so as to be inclined at a predetermined angle to the optical lens array 11. The solid-state imaging element 3 is fixed on the base board 13, while a partition wall 17 for partitioning a space between the optical lenses 8 and the solid-state imaging element 3 into a matrix of spaces for the respective optical lenses 8 (the matrix being to be seen on a plane perpendicular to the optical axes La shown in FIG 1) so as to prevent lights (emitted from the respective optical lenses 8 and arriving at the solid-state imaging element 3) from interfering each other. The optical lens system 2 further comprises an infrared cut filter 18 formed on an upper surface of the solid-state imaging element 3.

Referring to FIG 2 and other drawings, three optical lenses 8c in the center column of the optical lens array 11 (such optical lenses 8c being hereafter referred to as "center lenses") directly receive light entering in a range of approximately 40° in the capture range of 120°, while three optical lenses 8s in the left column and the three optical lenses 8s in the right column of the optical lens array 11 (such optical lenses 8s being hereafter referred to as "side lenses") receive lights entering in left and right ranges each of approximately 40° (which is not equal to or larger than approximately 60° to cause image distortion) in the capture range of 120° through the two 45-45-90 degree right-angle prisms 12, respectively.

Referring to FIG 4, the placement of the 45-45-90 degree right-angle prisms 12 relative to the optical lens array 11 will be described in more detail. Each of the 45-45-90 degree right-angle prisms 12 is placed such that each 45-45-90 degree right angle prism 12 allows light to enter through an outward side 12a of the two sides 12a, 12c containing the right angle, and reflects (mirror-reflects) the light by the hypotenuse 12b, and further emits the light through the other side 12c so as to bend and guide the light to each side lens 8s, directing the light along the optical axis La of the each side lens 8s which collects the light to form an image on the solid-state imaging element 3. In the present specification, surfaces of each 45-45-90 degree right-angle prism 12 for guiding and allowing light to enter through and for reflecting and emitting the light are referred to as "sides" and "hypotenuse" to describe such surfaces with reference to the optical path diagram of FIG 4.

More specifically, as shown in FIG 4, each 45-45-90 degree right-angle prism 12 is arranged such that the side 12c facing each set of the three side lenses 8s is inclined at an angle of 25° to the major planes of the optical lens array 11, while the hypotenuse 12b is inclined at an angle of 70° to the major planes of the optical lens array 11. This makes it possible to prevent light entering the center lenses 8c from being interrupted, because no portion of the 45-45-90 degree right-angle prisms 12 exists in the front range of approximately 40° (front range Zc) in the capture range of 120° as seen from the center lenses 8c. Each set of the three side lenses 8s collects light entering in the range of approximately 40° (each of left and right ranges Zs) through the outward side 12a, which is one of the sides 12a, 12c containing the right-angle of the 45-45-90 degree right-angle prism 12, so as to form images of the light on the solid-state imaging element 3.

Referring now to FIG 5 and FIG 6 in addition to FIG 1, the solid-state imaging element 3 will be described. The solid-state imaging element 3 used in the present embodiment is, for example, a CMOS (Complementary Metal Oxide Semiconductor) image sensor with a matrix of multiple unit pixels P in rows and columns corresponding to, and facing, a matrix of the optical lenses 8 of the optical lens array 11 in rows and columns as shown in part in FIG 1. As apparent from FIG 6 in addition to FIG 1, a horizontal scanning circuit 21 (reading means) is provided on a side of the solid-state imaging element 3, which side is parallel to each row of the unit pixels P, while a vertical scanning circuit 22 (reading means) is provided on a side of the solid-state imaging element 3, which side is parallel to each column of the unit pixels P. Image information stored as charges in the respective unit pixels P are read by the horizontal scanning circuit 21 and the vertical scanning circuit 22 in a sequence described later.

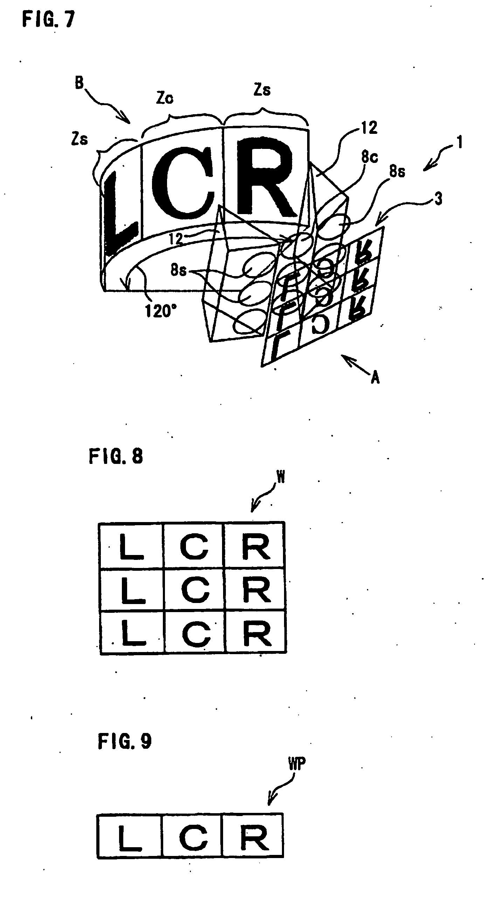

Referring next to FIG 7 in addition to other drawings, images formed on the solid-state imaging element 3 will be described. Here it is assumed that a target object B to be imaged is placed in front of the panoramic imaging device 1, and has equiangular (or equilength) image segments of "L", "C" and "R" in successive 40° (predetermined) angular ranges in the capture angle (picture-taking angle) of 120°. In this case, the image segment of "C" (i.e. center image segment in the front range Zc or in the center 40° angular range) is inverted up/down and lefl/right by the center lenses 8c to form three single-eye images of "C" in the center column on the solid-state imaging element 3 (images in the front range Zc). More specifically, as shown in FIG 7, when seen through the back of the solid-state imaging element 3 (from side A), each of the three single-eye images of "C" in the center column on the solid-state imaging element 3 is inverted up/down and left/right from the original image of "C" on the target object B. However, as shown in FIG 5, when seen from the front of the solid-state imaging element 3 (from the target object B), each of the three single-eye images of "C" is inverted only up/down from the original image of "C".

On the other hand, the image segment of "L" (left image segment in the left range Zs or in the left 40° angular range) and the image segment of "R" (right image segment in the right range Zs or in the right 40° angular range) are inverted left/right (mirror-inverted or mirror-reflected) by the 45-45-90 degree right-angle prisms 12, respectively. The thus left/right inverted image segments of "L" and "R" are then inverted up/down and left/right by the left and right side lenses 8s, respectively, to form three single-eye images of "L" and three single-eye images of "R" (images of the left and right ranges Zs) in the left column and the right column on the solid-state imaging element 3, respectively.

More specifically, as shown in FIG 7, when seen through the back of the solid-state imaging element 3 (from side A), each of the three single-eye images of "L" and each of the three single-eye images of "R" are inverted up/down from the original images of "L" and "R". However, as shown in FIG 5, when seen from the front of the solid-state imaging element 3 (from the target object B), the positions of the left and right columns of "L" and "R" are exchanged with, or reversed from, the original positions of "L" and "R" on the target object B relative to the center column of "C", while at the same time, the images of "L" and "R" per se in the left and right columns are inverted left/right and up/down from the original images of "L" and "R" on the target object B. These position exchange or reversal and the up/down or left/right inversion of the single-eye images are problems to be solved in order to reproduce a normal panoramic image.

Under the control of the image reproduction microprocessor 6, the combination of the horizontal scanning circuit 21 and the vertical scanning circuit 22 sequentially reads the thus formed nine single-eye images of "L", "C" and "R" as image information, while the image reproduction microprocessor 6 joins peripheral portions of, or overlapping portions between, adjacent two of the three images of "L", "C" and ''R", so as to form a panoramic image WP (refer to FIG 9) of a picture angle of 120° (original angle). An advantageous feature of the panoramic imaging device 1 of the present embodiment is in the sequence of reading image information from the unit pixels P on the solid-state imaging element 3 as described below. Based on the advantageous sequence of reading image information, the panoramic imaging device 1 of the present embodiment solves or eliminates the problems of the position exchange as well as up/down and left/right inversions of the single-eye images so as to form normal images W (refer to FIG 8) by using image information of the respective single-eye images of "L", "C" and "R" read from the solid-state imaging element 3 as is (by combining the single-eye image in the front range Zc with the single-eye images in the left and right ranges Zs as is), without requiring the image reproduction microprocessor 6 to exchange or reverse the positions of the single-images of "L" and "R" relative to the position of the single-eye image of "C" or to invert such single-eye images up/down and left/right.

Referring to FIG 5, single-headed arrows s1, s2, s3, s4 and so on shown in the front view of the solid-state imaging element 3 indicate the sequence of reading image information from the unit pixels P on the solid-state imaging element 3. Here, arrows s1, s2, s3, s4 and so on designate a first step, a second step, a third step, a fourth step, and so on in which the image information of the unit pixels P are read in this order by the horizontal scanning circuit 21 and the vertical scanning circuit 22 under the control of the image reproduction microprocessor 6. Note that in FIG 5, dashed lines F indicate boundaries between adjacent single-eye images on the solid-state imaging element 3, while arrows X and Y indicate row and column directions, respectively, in which the image information of the single-eye images are sequentially read.

As indicated by arrow s1 in FIG 5, the process of reading image information from the unit pixels P is started by reading the unit pixels P in the lowermost row of the lowermost single-eye image of "L". More specifically, the lowermost and rightmost unit pixel P in the lowermost single-eye image of "L" is read first. Then, the lowermost and the second (next) rightmost unit pixel P therein is read, and then the other remaining unit pixels P in the lowermost row of the lowermost single-eye image of "L" are sequentially read in the direction of arrow s1, namely direction X, with the lowermost and leftmost unit pixel P in the lowermost row of the lowermost single-eye image of "L" being finally read to conclude the reading of the lowermost row indicated by arrow s1.

Thereafter, as indicated by arrow s2, the unit pixels P in the lowermost row of the lowermost single-eye image of "C" are read. More specifically, the reading jumps so that the lowermost and leftmost unit pixel P in the lowermost single-eye image of "C" is read first. Then, the lowermost and the second leftmost unit pixel P is read, and then the other remaining unit pixels P in the lowermost row of the lowermost single-eye image of "C" are sequentially read in the direction of arrow s2 which is opposite to direction X, with the lowermost and rightmost unit pixel P in the lowermost row of the lowermost single-eye image of "C" being finally read to conclude the reading of the lowermost row indicated by arrow s2.

Subsequently, as indicated by arrow s3, the unit pixels P in the lowermost row of the lowermost single-eye image of "R" are read. More specifically, the reading jumps so that the lowermost and rightmost unit pixel P in the lowermost single-eye image of "R" is read first. Then, the lowermost and the second rightmost unit pixel P therein is read, and then the other remaining unit pixels P in the lowermost row of the lowermost single-eye image of "R" are sequentially read in the direction of arrow s3 namely direction X (same as the direction of arrow s1), with the lowermost and leftmost unit pixel P in the lowermost row of the lowermost single-eye image of "R" being finally read to conclude the reading of the lowermost row indicated by arrow s3. In this way, the panoramic imaging device 1 performs a step of reading the lowermost row of the solid-state imaging element 3.

Thereafter, similarly, the panoramic imaging device 1 performs a step of reading the second lowermost row of the solid-state imaging element 3. That is, the unit pixels P in the second lowermost row of the lowermost single-eye images of "L", "C" and "R" are read sequentially in the directions as indicated by arrows s4, s5 and s6 shown in FIG 5. In this way, the panoramic imaging device 1 performs steps of reading the third lowermost row, the fourth lowermost row and so on of the solid-state imaging element 3 up to the uppermost row of the solid-state imaging element 3, thereby concluding the reading of image information from all the unit pixels P on the solid-state imaging element 3.

The image information read in the sequence described above are received and temporarily stored by the image reproduction microprocessor 6 via the DSP 5 as is, such that the sequence of image information read from the solid-state imaging element 3 is maintained in the image reproduction microprocessor 6. When displayed as is, the image information received and temporarily stored by the image reproduction microprocessor 6 forms an image W shown in FIG 8. In other words, such image information in the image reproduction microprocessor 6 corresponds to the image W of FIG 8, in which the single-eye images of "L", "C" and "R" are positioned at normal positions of the corresponding original image segments of the target object B, while the up/down and left/right inversions of each single-eye image from each corresponding original image are eliminated, namely, the effects of mirror-reflection by the optical elements of 45-45-90 degree right-angle prisms 12 are eliminated. In this connection, it can be said that the "reading means" in the present embodiment reads the unit pixels P from the lowermost row to the uppermost row in the XY address type solid-state imaging element 3 so as to eliminate the up/down inversion of the single-eye images therein, which more specifically are the up/down inverted single-eye images of "C" in the front range Zc and the up/down and left/right inverted single-eye images of "L" and "R" in the left and right ranges Zs in the capture angle.

Accordingly, the image reproduction microprocessor 6 only needs to next perform a relatively simple additional process, such that based on the single-eye images of "L", "C" and "R" in e.g. the middle of the three rows of them in the image information corresponding to the image W shown in FIG 8, the image reproduction microprocessor 6 simply adjusts the positions and amounts (widths) of peripheral portions of, or overlapping portions between, adjacent two of the single-eye images of "L", "C" and "R" in the middle row when joining them to form a panoramic image WP as shown in FIG 9. Note that it is possible to minimize peripheral portions of, or overlapping portions between, adjacent two of the three single-eye images of "L", "C" and "R" because each of the optical lenses 8 has a view angle of approximately 40°, allowing each 45-45-90 degree right-angle prism 12 to collect light entering in a range of approximately 40° (in contrast to a large range of 60° or larger).

Also note that if the image information from the solid-state imaging element 3 were not read in the directions described above, and if the image information for the single-eye images of "L", "C" and "R" were read all in the same direction (e.g. direction X), then the image information for each of the single-eye images of "C" in the center column received and stored by the image reproduction microprocessor 6 would be inverted left/right from the original image of "C" on the target object B. This would further require an additional element such as a buffer memory, for example, and the image reproduction microprocessor 6 would have to allow the received image information to be temporarily stored in the additional element (buffer memory) so as to invert the left/right inverted image back to a normal image. This would require not only such additional element (buffer memory), but also a more complex process of reproducing a panoramic image WP from images separately captured in predetermined successive angular ranges in a capture angle.

Referring now to FIG 6, a specific example of a processing circuit to achieve the reading of the pixel units P in the sequence described above will be described. To simplify the description, it is assumed here that the solid-state imaging element 3 is formed of a matrix of 36 unit pixels P11, P12, ··· P66 arranged in 6 rows and 6 columns, and that the lowermost and rightmost single-eye image of "L" in FIG 5 is formed of four unit pixels P55, P56, P65, P66 positioned lowermost and rightmost in FIG 6. The unit pixels P11, P12,···P66 are connected to the vertical scanning circuit 22 by gate wirings G1, G2, ··· G6, respectively, each of which is common to each row, and are also connected to signal wirings H1, H2, ··· H6, respectively, each of which is common to each column.

The signal wirings H1, H2, · · · H6 are connected to switching elements J1, J2,···J6, respectively, which are switched between conduction (ON) and non-conduction (OFF) by signals from the horizontal switching circuit 21. The gate wirings G1, G2, ··· G6 are provided with pulse voltages at predetermined time intervals and sequentially in order from the gate wiring G6 in the lowermost row to the gate wiring G1 in the uppermost row in FIG 6. Thereby, unit pixels P11, P12, ··· P66 at intersection positions between gate wirings G1, G2, ··· G6 provided with pulse voltages and signal wirings H1, H2, · · · H6 connected to conducted switching elements J1, J2,···J6 are allowed to output charges stored therein as output signals (image information) therefrom via such signal wirings H1, H2,··· H6.

The horizontal scanning circuit 21 includes a logic circuit (not shown) to sequentially conduct (or switch on) the switching elements J1, J2,··· J6 in order from switching element J6 to switching element J5 to switching element J3 to switching element J4 to switching element J2 to J1. The sequential conduction of the switching elements J6, J5, J3, J4, J2, J1 in this order together with the sequential application of the pulse voltages from the gate wiring G6, G5, G4, G3, G2, G1 in this order as described above allows reading of the image information of the respective unit pixels P in order from unit pixel P66 to unit pixel P65 to unit pixel P63 to unit pixel P64 to unit pixel P62 to unit pixel P61 to unit pixel P56 to unit pixel P55 to unit pixel P53 to unit pixel 54 and so on up to unit pixel P11. Thus, the reading of the pixel units P in the sequence described above (s1 to s2 to s3 to s4 to s5 to s6 and so on) is achieved.

Note that the embodiment described above shows the case of arranging, in order in a row (i.e. row direction), the combination of the single-eye image of "C" in the front range Zc and the single-eye images of "L" and "R" in the left and right ranges Zs. However, it is apparent that such combination of the single-eye images of "L", "C" and "R" can be arranged in order in a column (i.e. column direction). In the case of the arrangement of the single-eye images of "L", "C" and "R" in order in a column, one of the two 45-45-90 degree right-angle prisms 12 (optical elements) is to be placed to correspond to, and extend along, the optical lenses 8 in the upper row, while the other of the 45-45-90 degree right-angle prisms 12 (optical elements) is to be placed to correspond to, and extend along, the optical lenses 8 in the lower row.

Furthermore, the sequence of reading image information of the unit pixels P from the solid-state imaging element 3 is to be made in a column instead of row used in the embodiment described above. At the same time, the arrangement of the horizontal scanning circuit 21 and the vertical scanning circuit 22 is to be modified correspondingly. In short, it is a matter of design choice whether to choose the arrangement described in the above embodiment to sequentially read the image information in a row on the solid-state imaging element 3, or to choose an arrangement to sequentially read the image information in a column on the solid-state imaging element 3. Thus, it can be said that the latter is an equivalent of the former. Accordingly, it is to be understood that the claims of the present application, which describe the former, also cover the latter in the scope of claim.

Also note that the 45-45-90 degree right-angle prisms 12 described above for mirror-reflecting lights entering in the left and right ranges in the capture angle so as to bend and guide the lights to the respective side lenses 8s, directing the lights each along the optical axis La of each side lens 8s, can be other optical elements such as 30-60-90 degree right-angle prisms and equilateral triangle prisms as well as a combination of multiple mirrors to invert images. Furthermore, in the present embodiment, one 45-45-90 degree right-angle prism 12 is provided for each set of three side lenses 8s in each of the left and right columns. However, it is also possible to provide three separate 45-45-90 degree right-angle prisms for, and inclined at three different angles to, the three side lenses 8s in each of the left and right columns, respectively, so as to collect lights entering in three different ranges in each of the left and right ranges Zs in the capture angle, respectively. In addition, the optical lens array 11 is not limited to the one having nine optical lenses 8 arranged in 3 rows and 3 columns, but can generally be one having optical lenses 8 arranged in m rows and n columns where m is an integer of 1 or more, and n is an integer of 3 or more.

As described in the foregoing, the panoramic imaging device 1 according to the present embodiment has advantageous features. For example, the optical lens system 2 of the panoramic imaging device 1 comprises the optical lens array 11 having the center lenses 8c and the side lenses 8s that are placed on one plane, and also comprises optical elements such as the 45-45-90 degree right-angle prisms 12 for collecting lights entering in the left and right ranges Zs in the capture angle so as to guide the lights to the side lenses 8s. This can make the panoramic imaging device 1 thin, and can prevent the entire panoramic imaging device 1 from becoming large in volume and size.

Furthermore, the direction of reading the images (image information) on the solid-state imaging element 3 is switched such that the direction of reading the images in the front range Zc is opposite to that in each of the left and right ranges Zs, so as to eliminate the effects of mirror-reflection of the images in the left and right ranges Zs in the capture angle that are caused by the left and right optical elements (45-45-90 degree right-angle prisms 12 or the like). Accordingly, the image reproduction microprocessor 6 can simply combine the read image in the front range Zc with the read images in the left and right ranges Zs as is, without requiring the image reproduction microprocessor 6 to exchange or reverse the positions of the images in the left and right ranges Zs relative to the position of the image in the front range Zc or to invert such images up/down and left/right. Thus, the process of combining the respective images imaged in the predetermined successive capture ranges in the capture angle to reproduce a panoramic image WP can be prevented from becoming complex.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the scope of the present invention.

## Claims

1. A panoramic imaging device (1) comprising:
an optical lens system (2) for collecting lights entering in multiple predetermined successive capture ranges in a capture angle so as to form corresponding multiple images on a predetermined focal plane;
imaging means (3) placed at the focal plane for converting the multiple images formed by the optical lens system to electronic image information; and
image reproducing means (6) for combining the electronic image information of the multiple images from the imaging means so as to reproduce a panoramic image,
wherein the optical lens system comprises:
an optical lens array (11) having a center lens (8c) for receiving light entering in a front range (Zc) in the capture angle as well as left and right sides lenses (8s) which are formed on a plane having the center lens formed thereon and on left and right sides of the center lens, respectively, and which have optical axes (La) parallel to that of the center lens, so as to respectively receive lights entering in the left and right ranges (Zs) in the capture angle; and
left and right optical elements (12) placed on a light entrance side of the optical lens array for mirror-reflecting and guiding the lights entering in the left and right ranges in the capture angle to the left and right side lenses, directing each light entering each side lens along the optical axis of the each side lens,
wherein the imaging means comprises:
an XY address type solid-state imaging element (3) with unit pixels (P) arranged in a matrix of rows and columns, in which an image (hereafter referred to as "front range image") formed by the center lens in the front range in the capture angle and images (hereafter referred to as "left and right range images") formed by the left and right side lenses in the left and right ranges in the capture angle are formed in order in a row of the unit pixels of the solid-state imaging element; and
reading means (21,22) reading the image information of the left and right range images in one direction (s1,s3,s4,s6) in the row of the unit pixels of the solid-state imaging element and for reading the image information of the front range image in a direction (s2,s5) opposite to the one direction in the row of the unit pixels of the solid-state imaging element, so as to eliminate effects of mirror-reflection of the left and right range images that are caused by the left and right optical elements, and
wherein the image reproducing means combines the front range image and the left and right range images read by the reading means as is, so as to reproduce the panoramic image.

2. The panoramic imaging device according to claim 1, wherein the reading means (21,22) reads the unit pixels from the lowermost row to the uppermost row in the solid-stage imaging element so as to eliminate up/down inversion of the single-eye images therein.

3. The panoramic imaging device according to claim 1 or 2, wherein each of the left and right optical elements is a right-angle prism.

## Patentansprüche

1. Panoramabilderzeugungsvorrichtung (1), umfassend:
ein optisches Linsensystem (2) zum Sammeln von Licht aus dem Eintritt in mehreren vorbestimmten aufeinanderfolgenden Fangbereichen in einem Fangwinkel zum Bilden von entsprechenden mehreren Bildern an einer vorbestimmten Brennebene; Bilderzeugungsmittel (3) mit einer Platzierung an der Brennebene zum Umwandeln der von dem optischen Linsensystem gebildeten mehreren Bilder in elektronische Bildinformation; und
Bildwiedergabemittel (6) zum Kombinieren der elektronischen Bildinformation der mehreren Bilder aus dem Bilderzeugungsmittel zum Wiedergeben eines Panoramabildes,
wobei das optische Linsensystem umfasst:
eine optische Linsenfeldanordnung (11) mit einer Zentrallinse (8c) zum Empfangen von Licht aus dem Eintritt in einem Vorderbereich (Zc) im Fangwinkel wie auch linken und rechten Seitenlinsen (8s), die an einer Ebene mit der Zentrallinse in Ausbildung daran und an linken beziehungsweise rechten Seiten der Zentrallinse ausgebildet sind und die optische Achsen (La) parallel zu derjenigen der Zentrallinse aufweisen, um jeweils Licht aus dem Eintritt in den linken und rechten Bereichen (Zs) im Fangwinkel zu empfangen; und
linke und rechte optische Elemente (12) mit einer Platzierung an einer Lichteintrittsseite der optischen Linsenfeldanordnung zum Spiegelreflektieren und Leiten des Lichtes aus dem Eintritt in den linken und rechten Bereichen im Fangwinkel zu den linken und rechten Seitenlinsen, wobei jedes Licht aus dem Eintritt in jede Seitenlinse entlang der optischen Achse jeder Seitenlinse geführt wird,
wobei das Bilderzeugungsmittel umfasst:
ein Festkörperbilderzeugungselement (3) vom XY-Adresstyp mit Einheitspixeln (P) in einer Matrixanordnung von Reihen und Spalten, worin ein Bild (nachstehend "Vorderbereichsbild" genannt), das von der Zentrallinse in dem Vorderbereich im Fangwinkel gebildet wird, und Bilder (nachstehend "linke und rechte Bereichsbilder" genannt), die von den linken und rechten Seitenlinsen in den linken und rechten Bereichen im Fangwinkel gebildet werden, in Abfolge in einer Reihe der Einheitspixel des Festkörperbilderzeugungselementes gebildet werden; und
Lesemittel (21, 22) zum Lesen der Bildinformation der linken und rechten Bereichsbilder in einer Richtung (s1, s3, s4, s6) in der Reihe der Einheitspixel des Festkörperbilderzeugungselementes und zum Lesen der Bildinformation des Vorderbereichsbildes in einer Richtung (s2, s5) entgegengesetzt zu der einen Richtung in der Reihe der Einheitspixel des Festkörperbilderzeugungselementes zum Beseitigen von Effekten der Spiegelreflexion der linken und rechten Bereichsbilder infolge der Verursachung durch die linken und rechten optischen Elemente, und
wobei das Bildwiedergabemittel das Vorderbereichsbild und die linken und rechten Bereichsbilder, die von dem Lesemittel so, wie sie sind, gelesen werden, zum Wiedergeben des Panoramabildes kombiniert.

2. Panoramabilderzeugungsvorrichtung nach Anspruch 1, wobei das Lesemittel (21, 22) die Einheitspixel von der untersten Reihe zur obersten Reihe in dem Festzustandsbilderzeugungselement liest, um eine Auf-/Abinversion der Einaugenbilder darin zu beseitigen.

3. Panoramabilderzeugungsvorrichtung nach Anspruch 1 oder 2, wobei jedes von den linken und rechten optischen Elementen ein rechtwinkliges Prisma ist.

## Revendications

1. Dispositif d'imagerie panoramique (1) comprenant :
un système de lentilles optiques (2) pour recueillir des lumières entrant dans plusieurs plages successives prédéterminées de prise de vue suivant un angle de prise de vue de manière à former plusieurs images correspondantes sur un plan focal prédéterminé ;
des moyens d'imagerie (3) qui sont placés au niveau du plan focal pour convertir les images formées par le système de lentilles optiques en informations d'image électroniques ; et
des moyens de reproduction d'images (6) pour combiner les informations d'image électroniques des images à partir des moyens d'imagerie de manière à reproduire une image panoramique,
le système de lentilles optiques comprenant :
un ensemble de lentilles optiques (11) qui a une lentille centrale (8c) pour recevoir la lumière entrant dans une zone avant (Zc) de l'angle de prise de vue, et des lentilles gauche et droite (8s) qui sont formées sur un plan sur lequel est formée la lentille centrale, qui sont situées à gauche et à droite de la lentille centrale, respectivement, et qui ont des axes optiques (La) parallèles à celui de la lentille centrale, de manière à recevoir respectivement des lumières entrant dans les zones gauche et droite (Zs) de l'angle de prise de vue ; et
des éléments optiques gauche et droit (12) qui sont placés sur un côté d'entrée de lumière de l'ensemble de lentilles optiques pour une réflexion en miroir et qui guident les lumières entrant dans les zones gauche et droite de l'angle de prise de vue vers les lentilles gauche et droite, dirigeant chaque lumière entrant dans chaque lentille latérale le long de l'axe optique de ladite lentille latérale,
les moyens d'imagerie comprenant :
un élément d'imagerie solide du type à adresses XY (3) avec des pixels (P) disposés dans une matrice de rangées et de colonnes, dans lequel une image (appelée dans ce qui suit "image de zone avant") formée par la lentille centrale dans la zone avant de l'angle de prise de vue et des images (appelées dans ce qui suit "images des zones gauche et droite") formées par les lentilles gauche et droite des zones gauche et droite de l'angle de prise de vue sont formées dans l'ordre dans une rangée des pixels de l'élément d'imagerie solide ; et
des moyens de lecture (21, 22) pour lire les informations d'image des images des zones droite et gauche dans une direction (s1, s3, s4, s6) dans la rangée des pixels de l'élément d'imagerie solide et pour lire les informations d'image de l'image de zone avant dans une direction (s2, s5) opposée à ladite direction dans la rangée des pixels de l'élément d'imagerie solide, de manière à supprimer les effets de réflexion en miroir des images des zones gauche et droite qui sont provoqués par les éléments optiques gauche et droit, et
les moyens de reproduction d'image combinent l'image de zone avant et les images des zones gauche et droite lues par les moyens de lecture telles quelles, de manière à reproduire l'image panoramique.

2. Dispositif d'imagerie panoramique selon la revendication 1, dans lequel les moyens de lecture (21, 22) lisent les pixels de la rangée du bas vers la rangée du haut dans l'élément d'imagerie solide de manière à supprimer l'inversion haut/bas des images monoculaires.

3. Dispositif d'imagerie panoramique selon la revendication 1 ou 2, dans lequel chacun des éléments optiques gauche et droit est un prisme droit.
